# EUROPEAN PATENT APPLICATION

(11) **EP 4 783 618 A1**
(43) Date of publication of application: **29.07.2026**
(21) Application number: 25171509.0
(22) Date of filing: 18.04.2025
(51) Int. Cl.: H04W 4/02, H04W 4/029, H04W 4/80, H04W 4/021

(54) **REAL-TIME TRACKING SYSTEM AND METHOD FOR A GROUP OF PEOPLE IN A CONTROLLED ENVIRONMENT**

(30) Priority: 24.01.2025 EP 25154098
(71) Applicant: Dimitriadis, Alexandros, 4540 Limassol (CY)
(72) Inventor: Dimitriadis, Alexandros, 4540 Limassol (CY)
(74) Representative: Weisse, Moltmann & Willems PartGmbB

(57) **Abstract**

The application relates to a system and method for real-time tracking of a group of people in a controlled environment, such as a theme park. The system may comprise a plurality of portable devices, each of which may be associated with a person, and a server device. Each portable device may include a housing, a data processing unit, a memory, a data communication unit with a wireless communication module and a GNSS module, and an interface. The portable devices may exchange data with each other and/or with the server device. The data may include location data, identification data, and communication data. The portable devices may be configured to calculate distance or direction based on exchanged data. A categorization of portable devices may be implemented. The system may further support periodic data transmission, group pairing modes, and optional functionalities such as NFC-based interactions. Communication may be implemented via ESP-NOW, Wi-Fi, LoRa, Bluetooth, or Zigbee and similar communication protocols.

## Description

### Technical field

The present application relates to a real-time tracking system and method for a group of people within a controlled environment, such as a theme park, or similar setting.

### Background

In controlled yet dynamic environments like theme parks, exhibitions, or large-scale events, maintaining cohesion within groups - especially families or school groups - can be difficult. Group members often separate intentionally to explore different attractions or unintentionally due to crowd density, distractions, or poor visibility. This problem is particularly acute when children are involved.

Many parents report feelings of anxiety and stress when they lose sight of their children in crowded places such as theme parks. Current park systems typically rely on staff to manually manage such situations. Trained personnel escort separated children to designated "lost child" zones, where they remain until reunited with their guardians. While effective to a degree, this manual process is time-consuming, resource-intensive, and does not prevent the initial separation. Each minute a child is missing causes emotional strain and diminishes the overall experience for both child and parent.

Moreover, many parks lack digital tools that enable real-time interaction with guests or capitalize on location-based marketing opportunities. For example, parks often miss chances to increase revenue by not delivering targeted promotions or personalized offers (e.g., food, merchandise, or ride discounts) based on the guest's current location or behavior within the park.

Without such tools, valuable opportunities to enhance the guest experience, improve satisfaction, and drive additional spending are lost - simply because the guest isn't informed of a relevant offer at the right moment.

### Object of the invention

The object of the invention was therefore to eliminate the disadvantages of the prior art and to provide a real-time tracking system and method for monitoring and managing the location of individuals within a group in a controlled environment, such as a theme park, thereby enhancing group coordination, reducing the likelihood and duration of accidental separation, and enabling real-time interaction between guests and the venue infrastructure.

### Disclosure of the invention

The object of the invention is solved by the features of the independent claims. Advantageous embodiments of the invention are described in the dependent claims.

In a first aspect, the application relates to a real-time tracking system and method for a group of people within a controlled environment.

The term controlled environment, as used herein, may refer to a spatially limited area that is managed or supervised by an operator or organization, and typically features defined physical or virtual boundaries, regulated entry and exit points, and a known or limited number of visitors at a given time. Such environments may include, but are not limited to, theme parks, amusement parks, trade fairs, exhibitions, zoos, museums, playgrounds, large airsoft games, military and police training environments, and other event, recreational, or training venues.

These environments may be characterized by the presence of organized infrastructure, staff or security personnel, and systems for visitor management, which makes them suitable for the implementation of real-time tracking technologies aimed at improving safety, visitor coordination, and user experience.

The system may comprise a plurality of portable devices, each of which may be associated with a person within the group. Each portable device can include a housing, a battery, a data processing unit, a data communication unit, a memory, and an interface that may be configured to output signals and/or receive inputs from the associated person.

The data communication unit may comprise at least one wireless communication module for wireless communication, which may support ESP32-based communication protocols, including ESP-NOW and/or support other protocols including, but not limited to, LoRa, Wi-Fi, Bluetooth, or Zigbee. Additionally, the device can include a GNSS module that may be used to determine location data.

The system may further include a server device that may be coupled to at least one of the portable devices via wireless communication. The at least one of the portable devices may be configured to provide location data to the server device, and the server device may be configured to transmit individual communication data to the at least one of the portable devices and to visualize the received location data.

In an example embodiment, the server device may be coupled to each portable device via wireless communication. The plurality of portable devices may each be configured to provide their location data to the server device, and the server device may be configured to transmit individual communication data to the portable devices and to visualize the received location data.

At least two of the portable devices may be configured to communicate with each other via wireless communication in order to exchange data. The data processing unit of each portable device can be configured to calculate the distance between devices and/or to determine the location relative to and/or the direction of the respective other portable device based on the exchanged data.

In this regard, the exchanged data may, for example, include location data determined by the GNSS system, or simply a signal that allows the receiving portable device to estimate the distance and/or direction to the transmitting device.

At least one of the at least two portable devices is preferably connected or coupled to the server device, in order to enable interaction between the persons of the group and the organizers of the controlled environment.

The system enables real-time tracking of individuals within a group through direct communication between portable devices using wireless protocols, such as ESP-NOW, thereby eliminating the need for cellular connectivity. Each device is equipped with a GNSS module that provides accurate position data, which can be exchanged locally to determine the relative distance and direction to other group members. This facilitates intuitive orientation and continuous group cohesion, even in crowded or complex environments.

In addition, the system supports server-side integration, allowing location data to be transmitted periodically to a central platform for visualization and administrative control. This central interface enables operators - such as park staff - to monitor device positions, analyze movement histories, and interact with users via targeted messages, including safety alerts or location-based offers.

As used herein, a portable device may refer, in general terms, to any self-contained, transportable unit that can be carried or worn by an individual and is configured to perform communication and/or data processing tasks within the system described. The term "portable" in this context may denote that the device is sufficiently lightweight, compact, and autonomous to be used independently of fixed infrastructure and to remain operable during movement through the controlled environment.

More specifically, a portable device in the present disclosure may be wearable or handheld and is typically intended to accompany a specific individual within the group throughout their stay in the defined environment, such as a theme park or similar venue. Being associated with a person means preferably that the device is physically assigned to and remains with that individual in a manner that enables continuous identification. The device may be secured to the person in various non-intrusive ways - for example, worn on the wrist, clipped to clothing, integrated into accessories, or carried in a pocket - without causing discomfort or impeding normal activities.

Each portable device may comprise a housing configured to enclose the functional components of the device. In example embodiments, the housing is made from a flexible and durable material, such as silicone or thermoplastic polyurethane, and is formed to be waterproof, thereby ensuring resistance to environmental influences and suitability for outdoor or high-humidity conditions. Without being limited to these materials, the housing may also be made from other suitable materials that provide comparable mechanical robustness and environmental resistance.

For example, the portable device is designed in the form of a smartwatch, wherein the housing is configured to be worn on the wrist of the associated person using a wristband. This form factor allows for intuitive use, ergonomic comfort, and high user acceptance, particularly for continuous use in leisure environments. The smartwatch design is lightweight, waterproof, and resilient, making it particularly well-suited for use by both adults and children during extended stays in dynamic environments.

Each portable device may comprise a battery configured to supply electrical power to the internal components of the device. The battery may be a rechargeable battery, such as a lithium-ion or lithium-polymer cell, and is preferably integrated into the housing in a manner that allows for safe and long-term operation.

Each portable device may further comprise a memory, which is configured to store operational data such as location data or coordinates, device identifiers, event logs, and program instructions. The memory may include non-volatile storage, for example flash memory, to ensure data persistence even during extended operation.

A data processing unit, which may comprise a microcontroller or processor, is operatively coupled to the memory and configured to execute the program instructions stored therein. These instructions enable the processing unit to perform various tasks, including but not limited to geolocation analysis, distance calculation - such as by applying the Haversine formula or similar - signal strength evaluation (e.g., via RSSI), and management of wireless communication protocols such as ESP-NOW, Wi-Fi, or NFC etc.

The software executed by the data processing unit typically comprises firmware that manages device functions, including real-time tracking, device pairing, group association, alert handling (such as SOS or boundary violation signals), and user interaction via visual, vibrational, or audio feedback components. This firmware may be stored locally in the device memory and operates autonomously or in coordination with external infrastructure.

In addition, the portable device may comprise a data communication unit configured to enable wireless data exchange with external entities. The term data communication unit, as used herein, may refer to a functional component that facilitates the transmission and reception of digital data, including communication between individual portable devices as well as communication with centralized infrastructure components such as a server or management platform.

The data communication unit may comprise one or more wireless transceivers and may be operable to support various communication standards or protocols, depending on system requirements. These may include, for example, protocols enabling direct device-to-device communication within a group, as well as those enabling data transfer to a remote system component for centralized processing, visualization, or control.

In an example embodiment, the data communication unit may include an ESP32-based wireless communication module. The ESP32-based module may support dedicated wireless communication protocols such as ESP-NOW, which allows low-latency, connectionless, peer-to-peer communication between ESP32 devices. This enables multiple portable devices to exchange data - such as location coordinates or status signals - without the need for a conventional Wi-Fi access point or cellular infrastructure. Such a configuration is particularly suitable for operation in environments with unreliable or unavailable network coverage, as it ensures robust local communication and supports the decentralized nature of group tracking.

Optionally, in some alternative embodiments, the same or an additional ESP32-based module - or another compatible module - may support further communication interfaces, such as Wi-Fi or Bluetooth. These may be used, for example, to enable expanded functionalities such as firmware updates, diagnostics, or secure fallback communication - either between the portable devices and the server device, or among the portable devices themselves - in case the primary ESP-NOW communication is temporarily unavailable.

Each portable device may be connected to the server device via a wireless communication module and is configured to communicate with the server device using dedicated wireless communication protocols, such as ESP-NOW. In particular, location data determined by a GNSS module may be transmitted to the server device, which processes the location data and/or forwards it to other entities for further use. Conversely, the server device may also transmit data to the respective portable devices, for example to send instructions, updates, or synchronization data.

It is understood that other communication protocols may also be used for communication between the portable device and the server device. Such alternative protocols may include, for example, LoRa, Wi-Fi, Bluetooth, or Zigbee.

The data communication unit may further comprise a GNSS module configured to determine the current geographic position of the portable device. The GNSS module may be integrated as part of the communication architecture and operatively coupled to the data processing unit, thereby enabling continuous or periodic acquisition of location data. This location data may be used locally - for example, to calculate the relative distance and direction to other devices within a group - or transmitted to external systems via the communication unit for purposes such as real-time tracking, user notification, or centralized visualization on a management platform.

Generally, a GNSS (Global Navigation Satellite System) module may refer to a hardware component configured to receive and process signals from global satellite navigation systems such as GPS (Global Positioning System), GLONASS, Galileo, or BeiDou. Enhanced accuracy methods such as Real-Time Kinematic (RTK) GNSS may also be used, particularly in static outdoor environments where high precision is required.

The GNSS module is preferably used to determine the geographic location (latitude, longitude, altitude) of the device in which it is integrated, typically by calculating position data based on the timing of signals received from multiple satellites. The module may include an integrated antenna, a signal processing unit, and an interface for communication with a host processor or system.

To ensure privacy and data security, all transmitted information - such as location and status data - may be protected using strong encryption mechanisms, ensuring that sensitive user data remains accessible only to authorized personnel within the system.

In an exemplary embodiment, the communication unit may comprise an NFC (Near Field Communication) chip. The integration of such a chip enables short-range wireless interactions between the portable device and external systems within the controlled environment. Functionalities supported by the NFC chip may include cashless payments, access control, or personalized content retrieval.

For example, park photographers may use NFC-enabled scanners to tag photos directly to a guest's wristband, allowing guests to retrieve their photos at self-service kiosks before exiting the venue. Similarly, guests can scan their wristbands to make purchases for food, merchandise, or locker access without the need for physical tickets or cash. This seamless integration of NFC functionality enhances the overall user experience, while simultaneously improving operational efficiency and revenue opportunities for the venue operator.

Additionally, the NFC chip may also be configured to receive data during interactions with infrastructure elements, such as payment terminals or access points. For example, when a person interacts with an NFC-enabled kiosk or station, the portable device may receive data indicating whether other group members have previously used the same terminal within a certain time frame. This can provide contextual awareness about recent group activity and may support features such as location-based coordination or time-stamped group tracking. In some embodiments, the data processing unit and the data communication unit may be implemented on a common ESP32 microcontroller or on multiple ESP32 microcontrollers. Each portable device can be equipped with such a microcontroller, which serves both as the central processor for executing local computational tasks and as the communication interface for managing wireless data exchange with external entities and other portable devices.

A Received Signal Strength Indicator (RSSI) may be used as a basis for estimating distance between devices, particularly in scenarios where GNSS reception is limited or unavailable. For this purpose, the portable devices may be configured to exchange ESP-NOW messages at regular intervals or in other words, to communicate with each other via the ESP-NOW communication protocol in order to exchange data. Upon receiving a message, each device determines the RSSI value of the incoming signal and uses it to estimate the relative distance to the sending device. This continuous data exchange enables proximity estimation and spatial awareness without requiring satellite-based positioning. Also, the RSSI value may be used in combination with location data to improve the accuracy of distance or direction estimation.

Additionally, or alternatively, in some example embodiments, the ESP32 microcontroller may be configured to process geolocation data acquired via an integrated GNSS module and to compute relative distances and/or directions between devices using the Haversine formula or similar. This formula enables the calculation of the great-circle distance between two sets of geographic coordinates, providing accurate distance measurements in meters. In such cases, it is apparent that the data exchange between the portable devices also includes the respective location data obtained via the GNSS module.

Similar to Haversine formula is for example: Vincenty's Formulae, Spherical Law of Cosines, Equirectangular Approximation.

Accordingly, the data processing unit of each portable device may be configured to calculate the distance to at least one other portable device based on the Haversine formula or similar and/or RSSI-based estimation methods. This enables the system to support precise real-time tracking, proximity analysis, and context-aware interactions within the controlled environment.

By integrating the data processing unit and the data communication unit on a common ESP32 microcontroller, the system benefits from a compact, energy-efficient, and cost-effective architecture. This unified design supports both peer-to-peer communication and centralized data transmission, thereby enabling flexible deployment in environments with limited or intermittent network infrastructure.

Moreover, the portable device may comprise a user interface, which is configured to enable interaction between the device and the associated person, i.e., the wearer or user of the device. The user interface may be adapted to output signals and/or receive user inputs, thereby facilitating intuitive, real-time communication, orientation, and emergency signaling within the system.

The interface may comprise output means, which may include visual, vibrational, and/or audio output components, configured to communicate information to the user in a non-verbal and accessible manner. For example, visual output may be provided via an integrated display, light indicators, or icon-based signals; vibrational output may be implemented using a haptic feedback motor; and audio output may involve buzzers, beepers, or small speakers.

In certain embodiments, the devices may include vibrating motors to provide haptic feedback for specific events, such as boundary violations, incoming proximity alerts, or SOS emergency signals. This ensures that critical information can be perceived even in noisy or visually distracting environments, thereby enhancing situational awareness and user responsiveness.

In one example embodiment, the interface may comprise a display integrated into the housing of the portable device. The display may be configured to present directional and/or positional information related to one or more other portable devices. In particular, the system may utilize a compass-like graphical representation to indicate the direction and/or distance to other members of a predefined group, based on geospatial data calculated by the device. This approach allows for orientation and group coordination without the need for complex map-based interfaces.

The interface may further comprise input means, which may include mechanical input elements such as buttons or touch-sensitive surfaces, and/or voice input components configured to receive spoken commands or signals. These input mechanisms enable user interaction with minimal effort and can be tailored to different user groups.

In one example embodiment, a portable device for adults may include a touchscreen display configured to support real-time navigation and orientation within the controlled environment. The display may present a compass-style interface with directional arrows and distance indicators, showing the exact distance in meters to friends or other group members. Additionally, the display may provide contextual updates, such as time and location-related information, in a compact and easily readable format. This supports ease of navigation and orientation within the controlled environment.

In another example embodiment, a portable device designed for children may omit the display due to space limitations or age-appropriate design considerations. Instead, the interface may include a dedicated SOS button, preferably colored red and ergonomically placed for easy access. When pressed, this button triggers a predefined emergency alert that is transmitted to the portable devices of supervisory users (e.g., parents, guardians, or group leaders). The receiving device may react by initiating vibration and/or visual alert signals, enabling immediate awareness and response to the emergency.

Once the portable devices are paired within a group, the system enables all users to view the relative positions and directions of other group members. This functionality enhances group cohesion, safety, and situational awareness, particularly in dynamic or crowded environments such as amusement parks or public exhibitions.

The overall system design emphasizes ease of use and situational clarity. For instance, the compass-style interface allows users to navigate intuitively without relying on detailed map data, making the solution suitable for users of various ages and technical proficiency levels.

In some embodiments, the portable device may comprise an inertial measurement unit (IMU) sensor, which includes a magnetometer. The IMU sensor may be configured to detect and process orientation, motion, and directional data of the portable device in real time.

The magnetometer component enables the determination of the device's orientation relative to the Earth's magnetic field, thereby supporting compass-based directional capabilities. In combination with other IMU elements, such as an accelerometer and gyroscope, the system may calculate heading, tilt, and movement parameters, which are used to provide navigation assistance to the person associated with the portable device.

This configuration allows the portable device to present directional guidance, such as arrows pointing toward other group members or points of interest, based on real-time heading and position data. The integration of an IMU sensor with magnetometer thus enhances the situational awareness and navigational capabilities of the system, particularly in map-free, intuitive interfaces designed for use in dynamic or controlled environments.

In certain embodiments, the system may comprise a server device configured to communicate with a plurality of portable devices via wireless communication modules. The communication may rely on wireless protocols, such as ESP-NOW or alternatively other protocols mentioned above, enabling robust data exchange even in environments with poor cellular coverage. Each portable device is configured to provide its location data to the server device, either periodically or in response to defined events.

The server device may be further configured to process and store received location data in a central database, where it can be used for subsequent analysis or real-time display. In this context, the server device may visualize the positions or in other words plot the location data of the portable devices on a virtual map, which can be displayed as an output, for example , on a computer screen. This map representation supports situational awareness and allows operators to monitor the movement and distribution of individuals within the defined environment.

It is understood that the server device also comprises, or is operatively coupled to, a data processing unit, a data communication unit, a memory, and an interface for outputting signals and/or receiving inputs.

A web-based administration portal may be hosted on the server device and may serve as an interface for configuration, monitoring, and system management. Through this portal, operators may be able to assign portable devices to specific individuals or groups, observe current positions of associated users in real time, and access historical movement data. This capability may enable ongoing system control and may support operational oversight, including the detection of unusual movement patterns or the identification of underutilized areas within the controlled environment.

The administration portal may not only facilitate monitoring functions but may also support bidirectional communication with the portable devices. The server device may be configured to transmit individual communication data to the devices, which may include push notifications such as safety alerts, time-sensitive reminders, or promotional messages. These notifications may be generated manually by an operator or may be triggered automatically based on system conditions or predefined rules. For example, in the context of a theme park, operators may send an alert regarding an upcoming parade or a location-based promotion, such as a time-limited discount, to selected user devices.

In other words, the server device may be understood as a gateway or router that receives data from the portable devices and transmits it to a cloud-based system via the internet. Additionally, the server device may receive data or commands from the cloud and push them to the respective portable devices, thereby enabling bidirectional communication and centralized coordination.

Beyond real-time monitoring, the server device may be configured to analyze aggregated location data in order to derive insights into visitor behavior and crowd distribution. Such analysis may be used to optimize crowd flow, improve staff allocation, or coordinate control systems associated with attractions or rides. The ability to visualize historical data within the administration portal may further support strategic planning and continuous operational improvement.

By combining device-side location tracking, server-side data processing and visualization, and targeted communication capabilities, the system may offer a comprehensive solution for managing individuals within controlled environments. The system architecture may be designed to function independently of cellular networks, which may provide increased reliability in areas with high user density or limited infrastructure. While the system may be particularly suitable for use in theme parks, it may also be applied in other large-scale or high-density environments, such as airports, resorts, or public events, where centralized coordination and real-time feedback may be beneficial.

According to the present disclosure, at least two portable devices are configured to communicate with each other, for example via the ESP-NOW communication protocol, to exchange data such as signal strength values (RSSI) used for distance estimation and/or, their respective location data obtained via a GNSS module, and the data processing unit of each portable device is configured to calculate the distance and/or to determine the location relative to and/or the direction of the respective other portable device.

It may also be provided that a portable device not only transmits its own location data, but also relays the location data of other portable devices

In exemplary embodiments, the system architecture may provide for a functional differentiation between portable devices by assigning them to distinct device categories within a predefined group. In particular, at least one of the portable devices may be designated as a portable device of a first category, while the remaining portable devices of the same group may be designated as portable devices of a second category. This categorization may serve to define asymmetric communication roles and hierarchical data handling responsibilities within the group structure.

All portable devices of the second category may be configured to establish wireless connections with the portable device of the first category. Each device of the second category may be operable to transmit its location data to the device of the first category. In turn, the portable device of the first category may be configured to receive and process the transmitted location data and to forward its own location data, together with the received data, either to the portable devices of the second category and/or to a server device. This communication structure may enable localized data aggregation and redistribution, reducing system-wide communication load and enhancing real-time responsiveness within the group.

In certain embodiments, portable devices of the first category - typically assigned to supervising users such as parents, guardians, or group leaders - may be equipped with enhanced hardware and functionality in order to manage group coordination and enable standalone operation. These devices may include a high-sensitivity GNSS module for precise geolocation, a larger display interface for real-time orientation, extended memory capacity, and additional user interaction features, such as touch input or voice control. Due to their central role, first-category devices may also serve as data hubs within the group and manage secure communication with the server infrastructure.

By contrast, portable devices of the second category, which are assigned to individual group members such as children, visitors, or trainees, may be designed with a more compact and power-efficient configuration. These devices may omit certain components, such as a GNSS module or high-resolution display, as they are continuously linked to the corresponding first-category device. As a result, second-category devices can derive relevant group context, positioning, and communication routing via the group leader, allowing them to operate reliably while conserving resources and reducing system complexity.

The data processing unit of each portable device, regardless of category, may be configured to calculate the distance to other portable devices and/or to determine the relative location or direction of those devices based on received information. These calculations may enable each device to locally interpret spatial relationships within the group, allowing for enhanced orientation, proximity awareness, or cooperative behavioral logic, depending on the use case.

In certain embodiments, the data processing unit of the portable device of the first category may be configured to determine a radius based on input that may be received via the interface of the device from the person assigned to this portable device. The radius may define a threshold distance that indicates a permissible proximity between the portable device of the first category and one or more portable devices of the second category.

The radius may refer to a virtual circular zone around the first-category portable device, centered on its current geographic location. It defines the maximum allowed distance within which second-category portable devices (e.g., assigned to children, group members, or assets) should remain.

If it is determined that a portable device of the second category is located at a distance from the portable device of the first category that exceeds the determined radius, the interface of the portable device of the first category may generate a signal output. This output may include visual, vibrational, and/or audio signals, and may serve to notify the assigned person that the relative distance to another portable device has surpassed the configured threshold.

Such a configuration may enable, for example, a supervising person to be alerted if another group member moves beyond a defined range, thereby supporting awareness and safety within the controlled environment.

For example, if a portable device of the second category, such as one assigned to a child, moves beyond the set radius, the portable device of the first category, for instance a device assigned to a parent, may generate a vibrational alert via its interface to immediately notify the

In an example embodiment, the portable devices may be configured to periodically transmit location data to a server device in order to enable centralized tracking, analysis, or coordination within a controlled environment. The transmission intervals may be defined based on system parameters, operational goals, or energy management strategies, and may vary depending on the implementation.

More specifically, each portable device may be configured to transmit its location data to the server device at regular time intervals, which may range from 60 seconds to 90 seconds. This interval may be selected to balance the need for sufficient temporal resolution in location tracking with the goal of maintaining low power consumption and network efficiency. The transmitted location data may include, for example, GPS coordinates, timestamps, and device identifiers, which are received and processed by the server device for purposes such as real-time visualization, historical analysis, or triggering location-based events.

In certain embodiments, the portable devices may be configured to exchange location data directly with other portable devices within the system, without requiring intermediate communication through a central server. This direct device-to-device communication may be used to enable localized awareness, spatial coordination, or proximity-based interaction among users.

To support such functionality, each portable device may be operable to transmit its current location data to any other portable device within communication range. The transmission may occur at predefined intervals, which may be configured to ensure low latency and high responsiveness in peer-to-peer scenarios.

In a specific implementation, the portable devices may be configured to transmit their location data at intervals of approximately 2 seconds, in particular 1 - 3 second or preferably 1- 10 s. This relatively short transmission cycle allows each device to maintain an up-to-date view of the surrounding group members, enabling precise calculation of relative distances or directions, and supporting use cases such as real-time group tracking, directional guidance, or boundary monitoring.

Additionally, in a mesh network configuration, a portable device may not only transmit its own location data but may also forward location data received from other portable devices. This relaying mechanism extends the effective communication range and ensures that even devices that are not directly within communication range of each other can still receive relevant location updates, thereby enhancing network robustness and spatial awareness across the system.

In certain embodiments, the system may further be configured such that unpaired portable devices, i.e., devices not currently assigned to the same group or not explicitly paired with the communicating devices, may act as temporary relay nodes within the mesh network. If two portable devices that are part of the same group - such as a supervising first-category device and a second-category group member - are located beyond direct communication range, a third portable device, even if unpaired, may be used to relay data between them.

This opportunistic forwarding behavior allows the system to maintain connectivity between group members by utilizing all available devices within communication range. The relay function may be implemented transparently at the firmware level using ESP-NOW or similar low-latency protocols, enabling automatic detection and use of nearby devices as intermediate hops without requiring user interaction or persistent pairing. As a result, group cohesion is preserved even in complex or crowded environments where communication paths must dynamically adapt.

In other words, wherein at least two portable devices are configured to communicate with each other via wireless communication, either through direct peer-to-peer communication or by using an additional portable device as a relay, wherein the additional portable device does not have to be assigned to a person belonging to the group.

In certain embodiments, the exchanged data between two portable devices may be configured to trigger specific actions on the respective other device, such as displaying a visual notification, activating a vibration motor, or performing another predefined user alert or system response.

In order to establish communication relationships between the portable devices within the system, a pairing process may be employed. This process defines which devices are permitted to exchange data and visualize each other's positions. The system may support different pairing modes to accommodate various use cases, such as family coordination or flexible group formation.

In a first pairing mode, referred to as open pairing, each portable device may be configured to pair individually with one or more other devices, for example up to a predefined maximum number such as six. In this mode, the pairing relationship is one-to-one and must be established separately for each connection. For example, a first device must pair with both a second and a third device individually in order to exchange data with both. This mode allows for flexible but explicitly defined groupings between users and is particularly useful in open group scenarios where individual control over pairing relationships is desired.

In a second pairing mode, referred to as group-leader pairing, one portable device within the group is assigned the role of a group leader (portable device of a first category) - typically a supervising user such as a parent or guide. When this group leader pairs with a new portable device (designated as a portable device of a second category), the newly paired device is automatically added to the group and gains access to all other members paired with the leader. For instance, when a first device (e.g., assigned to a father) pairs with a second device (e.g., assigned to the mother), and subsequently with a third device (e.g., assigned to the child), the third device automatically recognizes and establishes communication with both the first and second devices. This hierarchical structure simplifies the creation of family or guided groups and ensures synchronized awareness across all devices in the group.

Both pairing modes may be implemented via direct wireless communication protocols supported by the data communication unit, such as ESP-NOW, and may optionally include authentication or confirmation mechanisms via the device interface to ensure secure and intentional pairing. The selected pairing mode may be defined during initial setup or adjusted through the administration portal or device interface.

In other words, the system may support at least an open pairing mode and/or a group-leader pairing mode. In the group-leader pairing mode, a portable device of a first category is configured to pair with one or more portable devices of a second category, wherein each portable device of the second category automatically establishes communication with all other portable devices already paired with the portable device of the first category. In the open pairing mode, each portable device is configured to pair individually with one or more other portable devices of any category.

The open pairing mode enables flexible and individually controlled connections between portable devices, allowing ad-hoc group formation and personalized interaction settings, whereas the group-leader pairing mode simplifies group management by enabling a single group leader device to establish a shared communication structure that automatically synchronizes all members without requiring manual pairing between each device.

As previously described, the system according to the present disclosure may be implemented in a controlled environment. The term controlled environment may refer to a spatially defined area that is actively managed or supervised by an operator or organization, where the entry, presence, and movement of individuals can be monitored and regulated. Within such an environment, the system facilitates structured tracking, interaction, and communication between individuals through the use of assigned portable devices.

In one specific use case, the controlled environment may be a theme park, where the system facilitates group coordination, child safety, and real-time interaction through the exchange of location and status information. In yet another embodiment, the system may be employed in an outdoor zoo, wherein a zoo guide is assigned a portable device of a first category, while visitors are assigned portable devices of a second category. The categorization allows for a role-based structure of communication and data handling within the group.

The present disclosure further provides a method for real-time tracking of a group of people in a controlled environment, such as a theme park. The method may include providing a plurality of portable devices, each of which may be associated with a person in the group. Each portable device may comprise a housing, a battery, a data processing unit, a data communication unit, a memory, and an interface for outputting signals and/or receiving inputs from the associated person. The data communication unit may include a wireless communication module, which may support wireless communication, with ESP-NOW, LoRa, Wi-Fi, Bluetooth or Zigbee being one possible communication protocol. Additionally, the data communication unit may include a GNSS module for determining location data.

A server device may be communicatively coupled to each portable device via the wireless communication module. In this configuration, the plurality of portable devices may be configured to transmit their respective location data to the server device, while the server device may be configured to transmit individual communication data to the portable devices and to visualize the received location data, for example, in the form of a virtual map.

Furthermore, at least two portable devices within the group may be configured to communicate directly with each other using wireless communication in order to exchange such as their respective location data. The data processing unit of each portable device may be configured to calculate the distance to the respective other portable device and/or to determine the relative location and/or direction of the other device. This may enable real-time peer-to-peer awareness and interaction, independent of server-based processing, and may form the basis for functions such as proximity alerts, directional guidance, or group coordination.

Further examples of embodiments are explained in more detail below with reference to the accompanying drawings. The invention is not intended to be limited solely to these listed examples of embodiments. They merely serve to explain the invention in more detail. The present invention is intended to relate to all objects which the person skilled in the art would use now and, in the future, as obvious to realize the invention.

### Brief description of the figures

- **Fig. 1**: shows a schematic overview of an example embodiment of a real-time tracking system.
- **Fig. 2**: shows a schematic block diagram of the components of a portable device used in the real-time tracking system.
- **Fig. 3**: shows a flowchart outlining an example embodiment of a method for real-time tracking of a group of people in a controlled environment.

### Detailed description of the figures

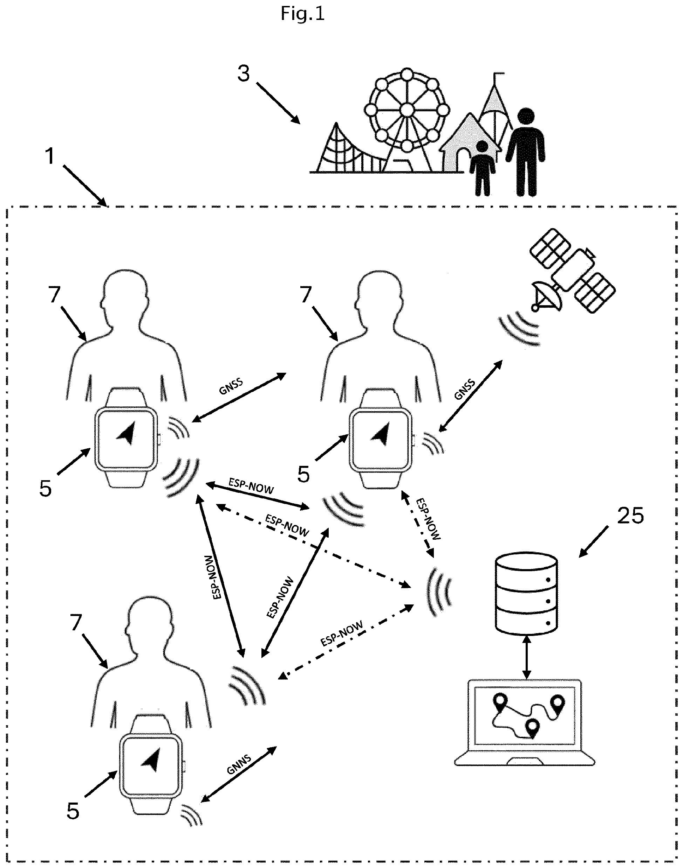

**Fig. 1** shows a schematic overview of an example embodiment of a real-time tracking system **1** that may be used for monitoring a group of people **7** in a controlled environment, such as a theme park **3.** The system **1** may comprise multiple portable devices **5,** each of which may be associated with a person **7.** Each portable device **5** may comprise a housing **9,** a battery **11,** a data processing unit **13,** a data communication unit **15,** a memory **17,** and an interface **19** for interaction with the person **7.**

The data communication unit **15** may include an ESP32-based wireless communication module **21,** which may support communication using the ESP-NOW protocol, and a GNSS module **23** that may be used for determining the location of the respective portable device **5.**

Each portable device **5** may be configured to transmit its location data to a server device **25** via ESP32-based wireless communication, particularly using ESP-Now protocol. The server device **25** may be coupled to each of the portable devices **5.** It may be configured to visualize the received location data, for example, on a computer display that can plot the movement or positions of the individuals. The server device **25** may also transmit individual communication data to the portable devices **5.**

At least two of the portable devices **5** may be configured to communicate directly with each other using the ESP-NOW protocol. Through this communication, the devices may exchange data such as their respective location coordinates. The data processing unit **13** of each portable device **5** may be configured to calculate the distance to the other device and to determine the relative location and direction to it.

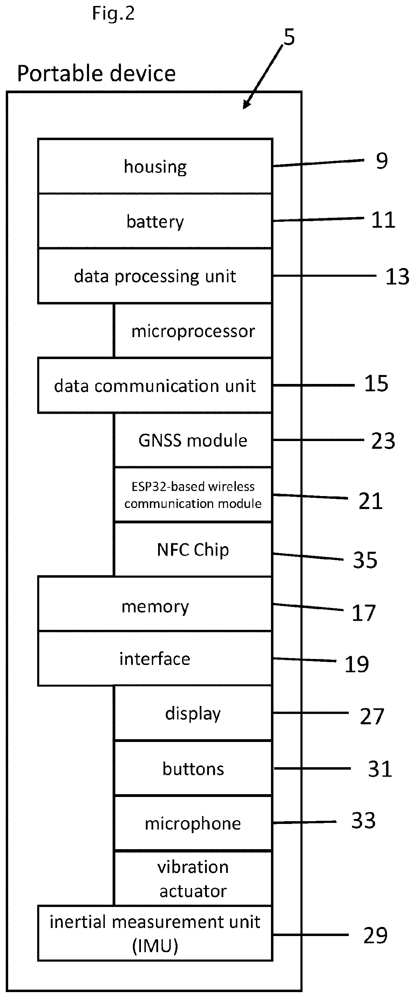

**Fig. 2** shows a schematic block diagram of the components of an exemplary portable device **5** used in the real-time tracking system **1.** The portable device **5** may comprise a housing **9** and a battery **11.** A data processing unit **13** may be included and can comprise a microprocessor.

The portable device **5** may further comprise a data communication unit **15.** The data communication unit **15** can include a GNSS module **23** and an ESP32-based wireless communication module **21.** The data communication unit **15** may also comprise an NFC chip **35.**

The portable device **5** may comprise a memory **17.** An interface **19** can be present and may include a display **27,** buttons **31,** a microphone **33,** and a vibration actuator. The interface **19** can be configured to output signals and receive input from a person **7.** An inertial measurement unit (IMU) sensor **29** may also be part of the portable device **5.**

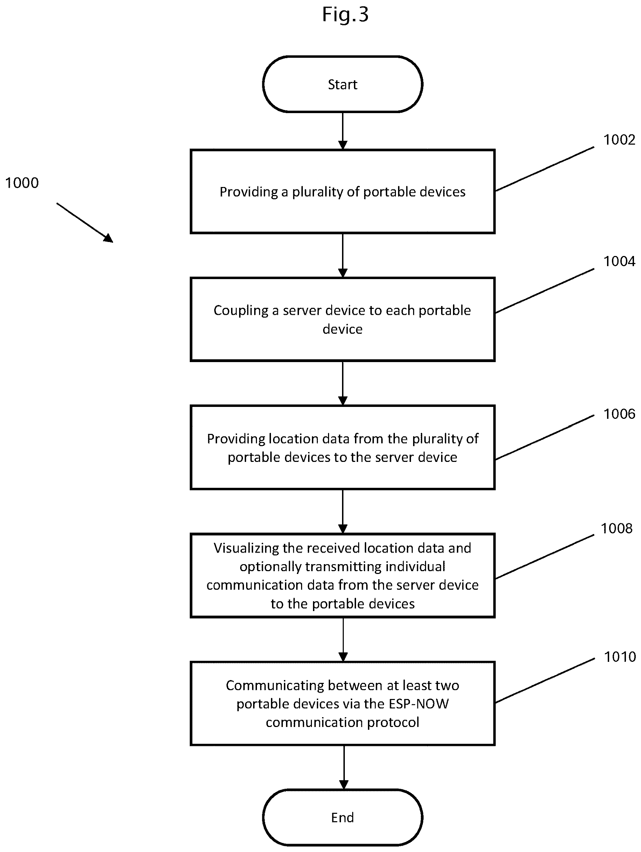

**Fig. 3** shows a flowchart outlining an example embodiment of a method **1000** for real-time tracking of a group of people in a controlled environment such as a theme park **3.**

The method may comprise step **1002,** which can include providing a plurality of portable devices **5.** Each portable device **5** may be associated with a person **7** and can comprise a housing **9,** a battery **11,** a data processing unit **13,** a data communication unit **15,** a memory **17,** and an interface **19.**

The method may comprise step **1004,** which can include coupling a server device **25** to each portable device **5** via ESP32-based wireless communication.

The method may comprise step **1006,** which can include providing location data from the plurality of portable devices **5** to the server device **25.**

The method may comprise step **1008,** which can include transmitting individual communication data from the server device **25** to the portable devices **5** and visualizing the received location data.

The method may comprise step **1010,** which can include communicating between at least two portable devices **5** via the ESP-NOW communication protocol.

### REFERENCE NUMERAL LIST

- 1: real-time tracking system
- 3: theme park
- 5: portable device
- 7: person
- 9: housing
- 11: battery
- 13: data processing unit
- 15: data communication unit
- 17: memory
- 19: interface
- 21: ESP32-based wireless communication module
- 23: GNSS module
- 25: server device
- 27: display
- 29: IMU sensor
- 31: buttons
- 33: microphone
- 35: NFC chip
- 1000: method
- 1002: method step
- 1004: method step
- 1006: method step
- 1008: method step
- 1010: method step

## Claims

1. A real-time tracking system (1) for a group of people in a controlled environment, such as a theme park (3), comprising:
• a plurality of portable devices (5), each associated with a person (7) in the group, wherein each portable device (5) comprises a housing (9), a battery (11), a data processing unit (13), a data communication unit (15), a memory (17), and an interface (19) for outputting signals and/or receiving inputs from the person (7) associated with the portable device (5), wherein the data communication unit (15) includes:
∘ at least one wireless communication module for wireless communication, which includes ESP-NOW, LoRa, Wi-Fi, Bluetooth or Zigbee as one possible communication protocol, and
∘ a GNSS module (23) for determining location data;
• a server device (25) having a wireless communication module coupled to at least one of the portable devices (5) via wireless communication, wherein:
∘ the at least one of the portable devices (5) is configured to provide location data to the server device (25), and
∘ the server device (25) is configured to transmit individual communication data to the at least one of the portable devices (5) and to visualize the received location data;
• wherein at least two portable devices (5), including the at least one portable device (5) coupled to the server device (25), are configured to communicate with each other via wireless communication to exchange data such as for example location data, and the data processing unit (13) of each portable device (5) is configured to calculate the distance and/or to determine the location relative to and/or the direction of the respective other portable device (5) based on the exchanged data.

2. The system (1) according to claim 1,
• wherein at least one of the portable devices (5) is assigned as a portable device (5) of a first category, and all other portable devices (5) are assigned as portable devices (5) of a second category,
• wherein all portable devices (5) of the second category are wirelessly coupled to the portable device (5) of the first category,
• wherein each portable device (5) of the second category is configured to transmit its location data acquired through GNSS module to the portable device (5) of the first category, and
• wherein the portable device (5) of the first category is configured to transmit its own location data and the received location data to the portable devices (5) of the second category and/or the server device (25),
• wherein the data processing unit (13) of each portable device (5) of both categories is configured to calculate the distance and/or determine the location relative to and/or the direction of the respective other portable devices (5).

3. The system (1) according to claim 2, wherein data processing unit (13) of the portable device (5) of the first category is configured to determine a radius based on input from a person (7) assigned to this portable device (5) via the interface (19), and if a portable device (5) of the second category is at a distance from the portable device (5) of the first category greater than the radius, the interface (19) of the portable device (5) of the first category generates a signal output.

4. The system (1) according to any of the preceding claims,
- wherein the at least one portable device (5) coupled to the server device is configured to transmit location data to the server device (25) at intervals ranging from 60 seconds to 90 seconds and/or
- wherein the portable devices (5) are configured to transmit their location data to any other portable device (5) at intervals of 1 - 3 seconds.

5. The system (1) according to any of the preceding claims, wherein at least an open pairing mode and/or a group-leader pairing mode is supported,
wherein, in the group-leader pairing mode, a portable device (5) of a first category is configured to pair with one or more portable devices (5) of a second category,
wherein each portable device (5) of the second category automatically establishes communication with all other portable devices (5) already paired with the portable device (5) of the first category,
and wherein, in the open pairing mode, each portable device (5) is configured to pair individually with one or more other portable devices (5) of any category.

6. The system (1) according to any of the preceding claims,
- wherein the interface (19) of the portable device (5) comprises means for visual, vibrational, or audio output and/or means for mechanical input, such as buttons (31), and/or voice input, such as a microphone (33), and /or
- wherein the interface (19) of the portable device (5) comprises a display (27) integrated into the housing (9), configured to show the direction and/or location of other portable devices (5) using a compass representation.

7. The system (1) according to any of the preceding claims, wherein the wireless communication module comprises an ESP32-based wireless communication module allowing for communicating via ESP-NOW protocol.

8. The system (1) according to any of the preceding claims, wherein the portable device (5) is designed in the form of a watch, wherein the housing (9) is configured to be worn on the wrist of the assigned person (7) using a wristband.

9. The system (1) according to any of the preceding claims, wherein the portable device (5) comprises an IMU sensor (29) with a magnetometer for enabling orientation and directional capabilities to enhance navigation of a person (7) associated with the portable device (5).

10. The system (1) according to any of the preceding claims, wherein the data processing unit (13) of each portable device (5) is configured to calculate the distance and/or direction to the respective other portable device (5) using the Haversine formula or similar and/or Received Signal Strength Indicator.

11. The system (1) according to any of the preceding claims, wherein the data communication unit (15) comprises an NFC chip (35).

12. The system (1) according to any of the preceding claims, wherein the server device (25) is configured to store all location data in a database and/or to plot the location data on a virtual map, which can be displayed as an output and/or to analyze the stored location data for crowd flow optimization and/or to communicate with control systems of attractions or rides of a theme park (3).

13. The system (1) according to any of the preceding claims, wherein the at least two portable devices (5) are configured to communicate with each other via wireless communication, either through direct peer-to-peer communication or by using an additional portable device as a relay,
wherein the additional portable device (5) does not have to be assigned to a person (7) belonging to the group.

14. A use of the system (1) according to any of the preceding claims in a theme park (3).

15. A method (1000) for real-time tracking of a group of people (7) in a controlled environment, such as a theme park (3), comprising:
• Providing (1002) a plurality of portable devices (5), each associated with a person (7) in the group, wherein each portable device (5) comprises a housing (9), a battery (11), a data processing unit (13), a data communication unit (15), a memory (17), and an interface (19) for outputting signals and/or receiving inputs from the person (7) associated with the portable device (5), wherein the data communication unit (15) includes:
∘ at least one wireless communication module for wireless communication, which includes ESP-NOW, LoRa, Wi-Fi, Bluetooth or Zigbee as one possible communication protocol, and
∘ a GNSS module (23) for determining location data;
• Coupling (1004) a server device (25) having a wireless communication module to at least one of the portable devices (5) via wireless communication, wherein:
∘ the at least one of the portable devices (5) provide (1006) their location data to the server device (25), and
∘ the server device (25) transmits (1008) individual communication to the at least one of the portable devices (5) and visualizes the received location data;
• wherein at least two portable devices (5), ), including the at least one portable device (5) coupled to the server device (25), communicate (1010) with each other via the wireless communication module to exchange data such as for example location data, and the data processing unit (13) of each portable device (5) calculates the distance and/or determines the location relative to and/or the direction of the respective other portable device (5).
